# EUROPEAN PATENT SPECIFICATION

(11) **EP 1 606 811 B1**
(45) Date of publication and mention of the grant of the patent: **09.08.2006**
(21) Application number: 04721264.2
(22) Date of filing: 17.03.2004
(51) Int. Cl.: G11B 7/24

(54) **WRITABLE OPTICAL RECORDING MEDIUM**
BESCHREIBBARES OPTISCHES AUFZEICHNUNGSMEDIUM
SUPPORT D'ENREGISTREMENT OPTIQUE INSCRIPTIBLE

(30) Priority: 19.03.2003 EP 03100698
(43) Date of publication of application: 21.12.2005
(73) Proprietor: Koninklijke Philips Electronics N.V., 5621 BA Eindhoven (NL)
(72) Inventor: MEINDERS, Erwin, R., NL-5656 AA Eindhoven (NL); MIJIRITSKII, Andrei, NL-5656 AA Eindhoven (NL)
(74) Representative: van Liempd, Jan
(86) International application number: PCT/IB2004/050267
(87) International publication number: WO 2004/084205

(56) References cited:
- EP-A- 0 527 454
- EP-A- 0 830 941

## Description

The present invention relates to a writable optical recording medium comprising a substrate carrying a recording stack with at least a recording layer. In particular, it relates to a write-once optical record carrier.

Writable optical recording media have seen an evolutionary increase in data capacity by increasing the numerical aperture of the objective lens and a reduction of the laser wavelength. The total data capacity was increased from 650 MB (CD, NA = 0.45, λ = 780 nm) to 4.7 GB (DVD, NA = 0.60, λ = 650 nm) to finally 25 GB (Blu-ray Disc (BD), NA = 0.85, X = 405 nm). Whereby, throughout all media two different writing principals are applied: dye recording in case of write once CD-R and DVD+R and phase-change recording in case of rewritable CD-RW, DVD-RAM, DVD-RW, DVD+RW, and BD-RE.

Dye recording type media, in particular, write once optical discs are typically composed of a polycarbonate substrate having a recording layer material applied on a first surface thereof. The recording layer material is a composition made of a photochromic compound ―herein referred to as dye ― and a (conjugated) polymer component. The composition is optimized, in particular, the dye is chosen in order to fulfill conditions such as thermal stability, durability, writing sensitivity depending on the applied laser frequency and optical contrast of a reflected reading beam between written and unwritten portions of the recording medium. Known dye materials are cyanine, phthalocyanine and metallized azo.

A writing laser beam entering an optical record carrier is focused on the recording layer described above and is partially absorbed by the recording layer material. Thereby, the recording layer material is heated and decomposed, i.e. it durably and irreversibly changes its structure. More precisely, in the above composition electronic interaction and/or steric arrangement between the dye and the conjugated polymer varies when it is heated and, moreover, interaction among molecules of the dye changes so that the state of aggregation of the dye molecules change. These changes can be observed as a change in optical absorption and/or reflection behavior of the recording layer. Also, some mechanical deformation of the recording stack may occur.

A reading beam striking a mark written in the manner described above will be partially scattered by the decomposed area. Consequently, the intensity of the light reflected at said reflective metal layer depends on whether the reading beam strikes a mark or passes the recording layer almost undisturbed (unwritten areas).

The growing demand for higher data capacity and the general demand for lower cost has motivated manufacturers to seek for new recording materials. In US 5,648,135 for example a recording layer is proposed for a recordable optical disc in the wavelength range of 780 nm and 830 nm comprising a conjugated polymer and a dye which dye is selected from the group of phthalocyanine dyes, tetrapyradinoporphyradine dyes, naphthalocyanine dyes and nickel dithiol complexes.

Similarly, in US 5,443,940 an optical recording medium is proposed that contains a photochromic compound and a polymer component.

WO 97/08692 addresses the problem that some dyes do not have high enough dichroism (absorption of light being polarized parallelly to the orientation of the dye molecules divided by absorption of light being polarized perpendicularly) and other dyes were found not to be absorbent in the desired wavelength range. Effort was spent on the search for a suitable dye material providing a high dichroism and the ability to align with the orientation of a liquid crystalline material.

Although, the blu-ray disc has been introduced as a re-writable optical data storage system based on the phase-change writing principal manufacturers currently also work on the development of recording materials, in particular dyes, that can be used at the BD-wavelength of 405 nm. Also the availability of recording materials, dyes or organic substances, that show excellent recording characteristics, in particular at high speed recording conditions, is a preference for future generation optical discs. Furthermore, inorganic recording layers are considered as candidate for write-once applications. However, the production of that kind of materials often is very elaborate.

An objective of the present invention therefore is to provide a writable optical recording medium employing a competitive recording material which is easily producible and applicable.

According to a first aspect of the present invention this object is achieved by a writable optical recording medium as described in the opening paragraph which is characterized in that said recording layer is made of PEDOT and/or PEDOT-derivatives.

Note that the term PEDOT consecutively will be used to denote both the PEDOT-polymer and PEDOT-derivatives. Several polymerization processes have been described to obtain PEDOT (also referred to as PEDT) and PEDOT-derivatives in a stable doped form, see Groenendaal, L., Jonas, F., Freitag, D., Pielartzik, H., Reynolds, J.R., in "Poly(3,4-ethylenedioxy-thiophene) and its derivatives: past, present, and future", Adv. Mater., 12, 481 2000. For example, Bayer currently markets a Baytron® P grade, based on an oxidative polymerization process yielding a PEDOT/polystyrene sulfonic acid blend that can be processed as a dispersion in water. Though PEDOT is known (see also EP-A 339 400 and WO 01/90212) its usability as optical recording layer material has not been recognized so far.

PEDOT displays the following properties: good resistance to hydrolysis, good photo- and thermal and electrochemical stability. The high decomposition temperature of PEDOT of 300° C to 400° C is about 50-100° C higher than that of typical recording dyes. Therefore, PEDOT is expected to have a higher stability with respect to archival and shelf life than other known (organic) recording layer materials.

Due to its properties, PEDOT is very easily processible. The polymer is dispersible in water. Coatings of PEDOT therefore can be applied by conventional coating methods such as brushing, printing, ink-jet printing, off-set printing, spraying, roller-coating, and, preferably, spin-coating. Spin-coating is possible on a huge variety of substrates including glass, silicon, chromium, and gold. Furthermore, virtually all plastics can be coated with PEDOT, including polycarbonate, polyethylene, polyethylene terephthalate, polyamide, and polypropylene.

Whereas, all known recording methods and write-once recording materials presently applied for CD-R, CD-RW, DVD+R, DVD-RAM, DVD-RW, DVD+RW, and proposed for BD make use of an additional dye material in order to improve the absorption of the recording layer the absorption of PEDOT itself is perfectly adopted for the short wavelength as applied by Blu-ray Disc technology. Thus, PEDOT can be considered as a superior and cheap replacement of current recording materials containing dyes.

According to a second aspect which constitutes a further development of the first aspect of the invention the recording stack further comprises a first and second reflector layer arranged adjacent on opposite sides of the recording layer.

According to a third aspect which constitutes a further development of the second aspect of the invention the first and second reflector layers comprise silver.

According to a fourth aspect which constitutes a further development of one of the first to third aspects of the invention the recording stack further comprises a first and second dielectric layer arranged adjacent on opposite sides of the recording layer.

According to a fifth aspect which constitutes a further development of the fourth aspect of the invention the first and second dielectric layers comprise ZnS-SiO₂.

According to a sixth aspect which constitutes a further development of the fifth aspect of the invention the recording medium comprises the recording stack according to the third aspect of the invention formed on said substrate as a second recording stack, a spacer layer formed on said first recording stack opposite the substrate, the recording layer according to the fifth aspect of the invention formed on said spacer layer as a first recording stack, and a cover layer formed on said first recording stack opposite the spacer layer.

According to a seventh aspect which constitutes a further development of one of the first to sixth aspects of the invention the recording medium fulfils the requirements of a Blu-ray Disc.

According to an eighth aspect of the present invention the above objective is further achieved by the use of PEDOT and/or PEDOT-derivatives as recording layer material in a writable optical recording medium.

The above an other objectives, features and advantages of the present invention will become apparent from the following description of preferred embodiments thereof taken in coujunction with the accompanying drawings in which
Fig. 1 illustrates the chemical structure of PEDOT;
Fig. 2 illustrates the chemical structure of Baytron® P PEDOT/PSS blend;
Fig. 3 shows the measured index of refraction parallel and perpendicular to the surface plane of thin PEDOT films;
Fig. 4 shows ellipsometry measurements of the index of refraction (n) and absorption coefficient (k) of a thin PEDOT film;
Fig. 5 illustrates a cross sectional view of a writable optical recording medium according to a preferred embodiment of the present invention;
Fig. 6 shows the optical performance as a function of the thickness of a first silver layer in the writable optical recording medium according to Fig. 5;
Fig. 7 illustrates a cross sectional view of a writable optical recording medium according to another preferred embodiment of the present invention;
Fig. 8 shows the optical performance as a function of the thickness of a first silver layer in the writable optical recording medium according to Fig. 7;
Fig. 9 illustrates a cross sectional view of a dual-layer writable optical recording medium according to a third preferred embodiment of the present invention;
Fig. 10 shows the optical performance of the dual-layer writable optical recording medium according to Fig. 9.

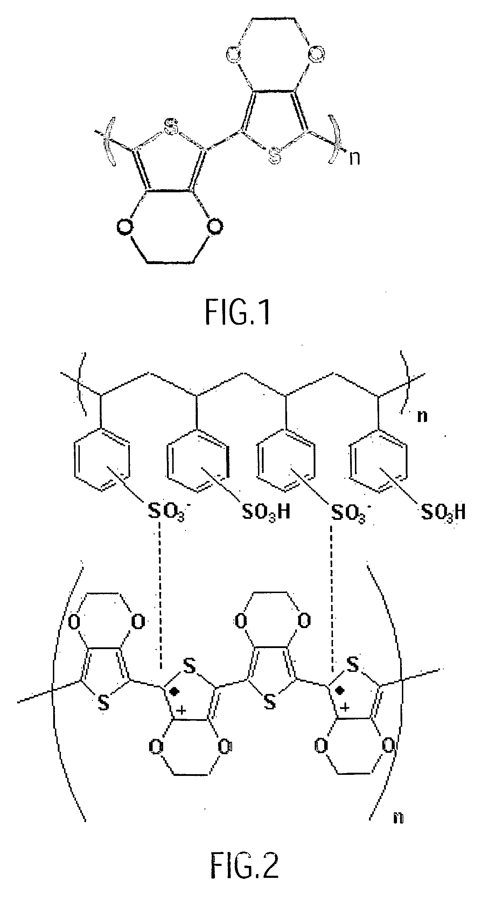

The chemical structure of PEDOT (poly(3,4-ethylenedioxythiophene) as illustrated in Fig. 1 has been published by Petterson et al. in 1999. As can be seen in Fig. 1, PEDOT is a conducting polymer based on a heterocyclic thiphene ring bridged by an diether. This means, it has the same conjugated backbone as polythiophene for example. As mentioned earlier above, however, in accordance with the present invention the term PEDOT herein is not to be understood as denotation for the basic polymer as shown in Fig. 1. PEDOT is rather to be understood as comprising both the polymer and its derivatives. An example of a PEDOT-derivative is given in Fig. 2, namely, a Baytron® P PEDOT/PSS blend.

The dependency on the wavelength of an incident light beam of optical properties of a PEDOT film deposited on glass with the optical axis parallel to the sample normal have been measured by Petterson et al. (1999). Measured values of the ordinary index of refraction (No or n_{*∥*}) parallel to a sample surface of a thin PEDOT film (upper solid line) and the extraordinary index of refraction (Nₑ or n_{⊥}) perpendicular to the sample surface of that film, but aligned with the optical axis (upper dotted line) are shown in Fig. 2. Furthermore, the absorption coefficient (k_{*∥*}) parallel to the sample surface of the thin PEDOT film (lower solid line) and the absorption coefficient (k_{⊥}) perpendicular to the sample surface (lower dotted line) are shown in this Fig.. As can be seen from the measurements the index of refraction and absorption coefficient of PEDOT are anisotropic.

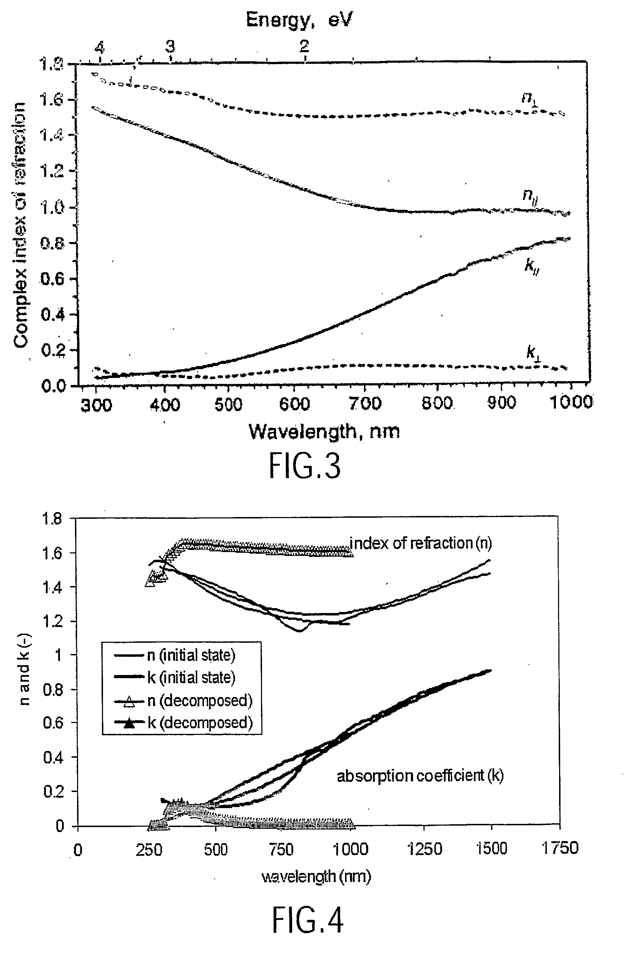

Further, we have measured the index of refraction n and absorption coefficient k of a 130 nm thick PEDOT layer (according to the formula shown in Fig. 1) spin-coated on a glass substrate. The optical properties n and k were measured with an ellipsometer at angles between 50-90°. The results are given in Fig. 4. Therein three sets of (n, k)-values are given for three different samples (init #1 to #3). The measured n and k can be denoted as effective parameters since no anisotropy is taken into account. Still, the values agree very well with the ordinary index of refraction (N₀ or n_{*∥*}) as measured by Petterson et al. (1999), compare Fig. 3.

We have further measured the optical properties of the decomposed PEDOT layer. Decomposition was achieved by heating the sample up to 400°C. A detectable difference in the index of refraction is observed at 405 nm wavelength between the initial (n(init)=1.45) and decomposed state (n(decomposed)=1.65). The measurements reveal that the absorption coefficient hardly changes upon decomposition (k=-0.1). Therefore, PEDOT can serve as recording medium in a write-once BD-R disc. The measurements further illustrate that PEDOT can be used at other recording wavelengths as well, such as the 780 nm wavelength as used in CD optical devices and 650 nm as used in DVD optical devices.

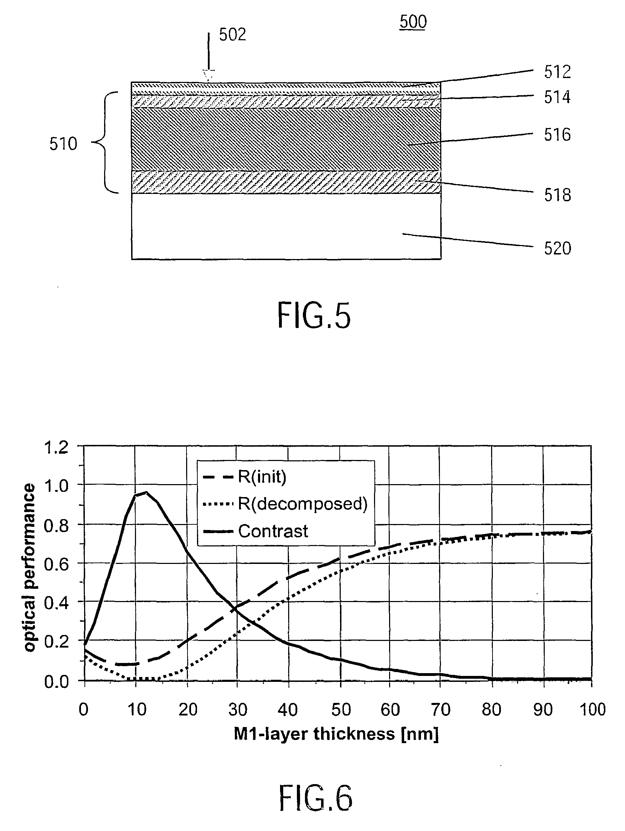

As can be seen in Fig. 5, a writable optical recording medium 500 in accordance with a first embodiment of the present invention comprises a recording stack 510. The recording stack 510 comprises, top-down - with regard to the direction of the incident light beam as indicated by arrow 502 - a first silver reflector or mirror layer 514, also referred to as M₁, a recording layer 516 made of organic PEDOT according to the formula shown in Fig. 1, also referred to as O, having a thickness of 60 nm, and adjacent to said recording layer 516 opposite the first reflector layer 514 a second reflector or mirror layer 518 also referred to as M₂ which in this embodiment is about 20 nm thick. The mirror layers 514, 518 in this example are made of silver but may as well consist of other metal or metal alloy, preferably aluminium, a mixture of Al with some percentage of Ti, or gold for example. The recording layer may further consist of any PEDOT-derivative. The bottom layer of the recording medium 500 underneath the recording stack 510 is a substrate 520 preferably made of polycarbonate. The above arrangement of layers, namely the first reflector layer 514, the recording layer 516, the second reflector layer 518 is laminated onto the substrate 520 in reverse order. A cover layer 512, herein also referred to as C is laminated on top of the recording stack for protection. This cover layer may be made of e.g. Sylgard 184 or of polycarbonate and in case of a BD-disc, this layer may be about 100 µm thick. The record carrier may as well be of the air-incidence type. The embodiment according to Fig. 5 represents a write-once recording stack.

A 405 nm blu-ray laser beam, as indicated by the arrow 502, is generated by a writing unit positioned at a predetermined position with respect to the record carrier. It enters the stack from the side of the M₁ layer 514 and is focused by said writing unit on the recording stack 510 and, more precisely, on the recording layer 516. In case a cover layer 512 is present the light is focused through that cover layer. Then, the energy transported by the electromagnetic radiation is partially absorbed in the recording stack 510 and, in particular, in the PEDOT material of the recording layer 516. The absorbed portion of the light induces sufficient heat for locally changing the optical properties of the PEDOT material (decomposition) in a manner as described above.

Fig. 6 illustrates these optical properties and, more precisely, the reflection of the initial and decomposed PEDOT stack and corresponding contrast as a function of the thickness of the first silver layer M₁ in the cover-M₁-O-M₂-substrate -stack as described in conjunction with Fig. 5. The reflection of the initial state is indicated by a dashed line, the reflection of the decomposed state is represented by a dotted line, and the corresponding contrast ― which can be denoted as normalized reflection difference: Contrast = (R(init) - R(decomposed)) / R(initial) ― is indicated by a full line. It was found that an M₁₋layer thickness of 12 nm results in the best optical properties: a high reflection difference, an initial reflection of 10% and a contrast of 95%.

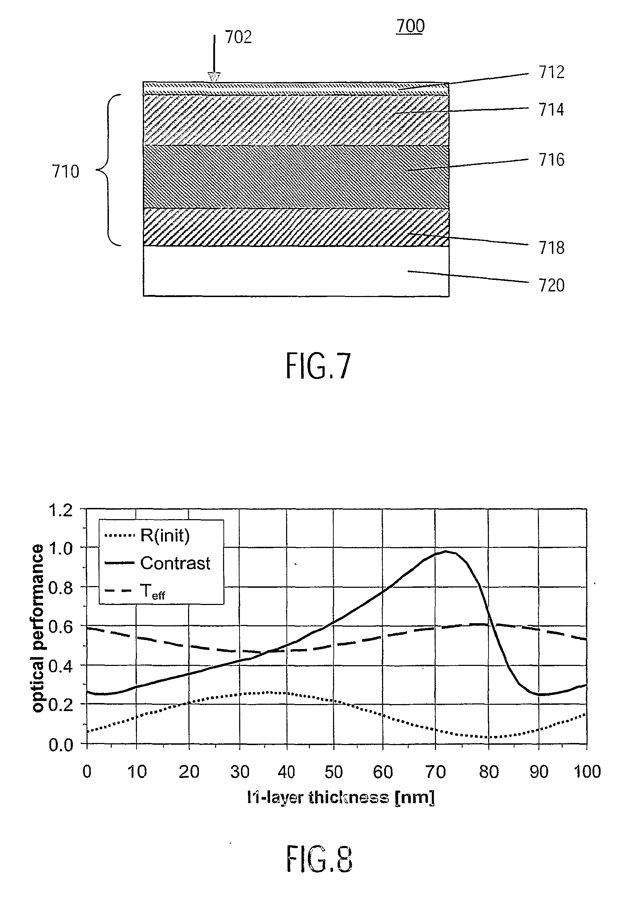

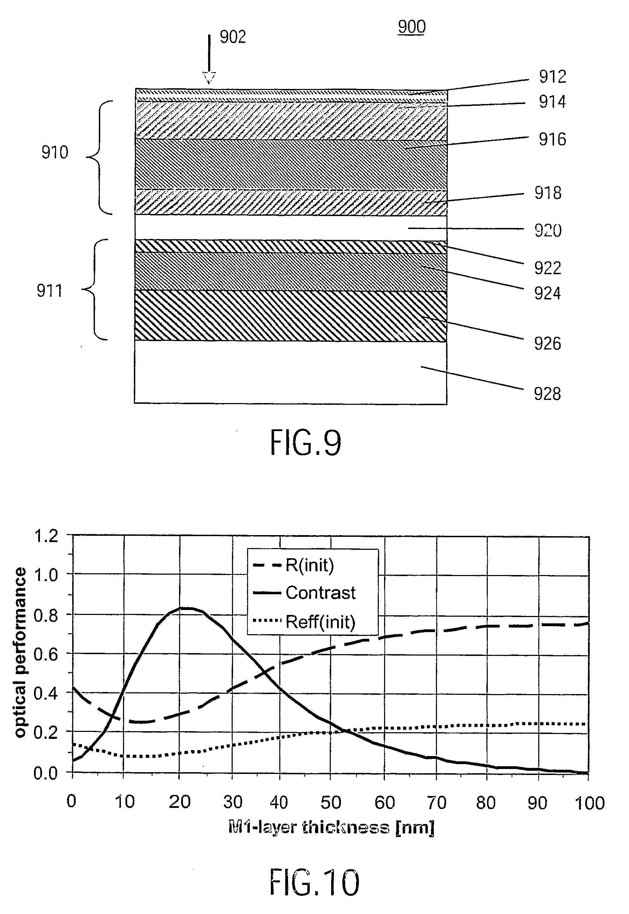

According to another embodiment of the present invention as shown in Fig. 7, a writable optical recording medium 700 comprises a recording stack 710 wherein an organic PEDOT recording layer 716, also referred to as O, is sandwiched between two dielectric layers 714, 718. The upper dielectric layer 714 (with regard to the direction of the incident light beam as indicated by arrow 702) is herein also referred to as I₁ or first dielectric layer, the lower one 718 is referred to as I₂ or second dielectric layer. The PEDOT recording material comprises the chemical structure according to the formula shown in Fig. 1. According to this embodiment it has a thickness of 100 nm. It may also consist of any PEDOT-derivative such as that shown in Fig. 2. The lower dielectric layer 718 according to this embodiment is 43 nm thick. Both dielectric layers 714, 718 are made of ZnS-SiO₂, e.g. (ZnS)₈₀(SiO₂)₂₀. The recording I₁-O-I₂ stack 710 may be employed as semitransparent stack in a dual layer optical recording disc. The bottom layer 720 of the recording medium 700, therefore, may be a spacer layer on top of a deep (with respect to the incident light beam 702) recording stack in a dual recording layer disc (see Fig. 9) or a (dummy-)substrate preferably made of polycarbonate for example. The above arrangement of layers, namely the first dielectric layer 714, the recording layer 716, the second dielectric layer 718 is laminated onto the bottom layer 720 in reverse order. A cover layer 712, herein also referred to as C, typically made of Sylgard 184 or of polycarbonate, is laminated on top of the recording stack for protection. Other (semi-) transparent materials such as Si₃N₄, SiC, Al₂O₃, etc may be used as well as dielectric layer in the claimed recording stacks based on PEDOT or/and PEDOT derivatives recording layers.

Again, a 405 nm blu-ray laser beam, as indicated by the arrow 702, generated by a writing unit enters the stack from the side of the I₁ layer 714 and is focused by said writing unit on the recording stack 710 and, more precisely, on the recording layer 716. Then, the energy partially absorbed in the recording stack 710 and, in particular, in the PEDOT material of the recording layer 716 and/or in the dielectric ZnS-SiO₂ layers I₁ 714 and I₂ 718 at sufficiently high laser powers induces a temperature rise in the PEDOT material that exceeds the decomposition temperature of the PEDOT material. In this way marks are written in the recording layer material.

The optical performance of the cover-I₁-O-I₂-spacer stack according to Fig. 7 as a function of the thickness of the first ZnS-SiO2 dielectric layer I₁ 714 is shown in Fig. 8. The optical performance of the stack: initial reflection (dotted line), contrast (full line) and effective transmission (dashed line; whereby, effective transmission = ¾ transmission of the initial state and ¼ transmission of the decomposed state) is found to be best at a I₁ layer thickness of 66 nm. Then the initial reflection being about 10% of the incident light, the contrast being 89% and the effective transmission after recording of 57% makes this stack suitable for dual-layer (or even multi-layer) recording. Therefore, the embodiment according to Fig. 7 represents a write-once recording stack and may be employed as a semitransparent top stack (with regard to the incident light beam), also referred to as L₀-stack, in a dual-layer disc.

Such a dual layer arrangement is shown in Fig. 9. A writable optical record carrier 900 in accordance with a third embodiment of the present invention comprises a lower L₁-recording stack 911 (with regard to the direction of the incident light beam as indicated by arrow 902) deposited onto a substrate 928. On top of the L₁ stack a first semi-transparent recording stack L₀ 910 may be deposited with a spacer layer 920 in between both stacks 910 and 911. Thereby, a I₁-O-I₂ recording layer as described in conjunction with Fig. 7 is proposed as first recording stack L₀. As outlined above, this stack has an effective transmission of 57%. A cover layer 912 may be arranged on top of the dual layer arrangement. A PEDOT layer sandwiched between two silver reflector layers is proposed as second recording stack L₁. The layout of the writable optical disc then becomes (bottom-up): substrate 928 - M₂ 926 - O 924 - M₁ 922 - spacer 920 - I₂ 918 - O 916 - I₁ 914 - cover 912. The I₁ layer is 66 nm thick, the PEDOT layer in the upper recording stack L₀ is 100 nm thick, and the I₂ layer is 43 nm thick. The thickness of the PEDOT layer in the lower M₁-O-M₂ stack is 60 nm, the deep silver layer M₂ is 100 nm thick.

Figure 10 shows the optical properties of the lower recording stack L₁ in the writable optical record carrier according to Fig. 9. In particular, the reflection (dashed line) and the effective reflection (dotted line; after having passed twice the first recording stack) of the initial state and the corresponding contrast (full line) are shown as a function of the thickness of the first silver layer M₁. It can be seen that a thickness of 22 nm gives an effective reflection of 10.5%, and a contrast of 83%.

It is noted that the present invention is not restricted to the above preferred embodiments. As would be obvious to one skilled in the art, many variations and modifications of the invention may be effected without departing from the spirit and the scope of the novel concepts of the disclosure. In particular, the application of a PEDOT recording layer is neither restricted to Blu-ray Disc technology nor to write once applications. Several arrangements of layers are possible in addition to those discussed above, e.g. C-I₁-O-h-M-S. A dual layer arrangement is also possible having a combination of different recording layers, whereby only one recording layer is made of PEDOT or a PEDOT-derivative and the other may comprise a recording dye or phase-change material, for example. Furthermore, a multi layer arrangement is possible having more than two recording layers, whereby at least one of these recording layers is made of PEDOT or a PEDOT-derivative. The dielectric layer material may be composed differently from the above embodiments. Further the reflector layers can be made of a different metal or metal alloy. The cover layer and the substrate materials are not restricted to the materials mentioned above. The thickness of all of the mentioned layers may be chosen differently from the ranges given in accordance with the above embodiments.

It should further be noted that an optical recording medium according to the present invention can also be used for multi level recording, whereby an increased number of data bits is stored in the same record carrier by applying multiple reflection levels, namely more than two reflection levels as known from conventional optical discs described above. These different reflection levels can be obtained by pit-width or pit-depth modulation, for example created by a higher laser power.

## Claims

1. A writable optical recording medium (500, 700, 900) comprising a substrate (520, 720, 920) carrying a recording stack which recording stack (510, 710, 910, 911) comprises a recording layer (516, 716, 916, 926), **characterized in that** said recording layer is made of poly 3,4-ethylenedioxythisphene (PEDOT) and/or poly 3,4-ethylenedioxythisphene (PEDOT)-derivatives.

2. A writable optical recording medium according to claim 1, **characterized in that** the recording stack further comprises a first (514, 922) and second reflector layer (518, 928) arranged adjacent on opposite sides of the recording layer.

3. A writable optical recording medium according to claim 2, **characterized in that** the first and second reflector layers comprise silver.

4. A writable optical recording medium according to claim 1, **characterized in that** the recording stack further comprises a first (714, 914) and second (718, 918) dielectric layer arranged adjacent on opposite sides of the recording layer.

5. A writable optical recording medium according to claim 4, **characterized in that** the first and second dielectric layers comprise ZnS-SiO₂.

6. A writable optical recording medium (900) according to claim 3 and 5, which recording medium comprises,
- the recording stack according to claim 3 formed on said substrate as a second recording stack,
- a spacer layer formed on said first recording stack opposite the substrate,
- the recording layer according to claim 5 formed on said spacer layer as a first recording stack,
- and a cover layer formed on said first recording stack opposite the spacer layer.

7. A writable optical recording medium according to claim 1, **characterized in that** it fulfils requirements of a Blu-ray Disc.

8. Use of poly 3,4-ethylenedioxythisphene (PEDOT) and/or poly 3,4-ethylenedioxythisphene (PEDOT)-derivatives as recording layer material in a writable optical recording medium.

## Patentansprüche

1. Beschreibbares, optisches Aufzeichnungsmedium (500, 700, 900) mit einem Substrat (520, 720, 920), welches einen Aufzeichnungsstapel (510, 710, 910, 911) trägt, der eine Aufzeichnungsschicht (516, 716, 916, 926) aufweist, **dadurch gekennzeichnet, dass** die Aufzeichnungsschicht aus Poly 3,4-Ethylendioxythiopen (PEDOT) und/oder Poly 3,4-Ethylendioxythiopen- (PEDOT) Derivaten besteht.

2. Beschreibbares, optisches Aufzeichnungsmedium nach Anspruch 1, **dadurch gekennzeichnet, dass** der Aufzeichnungsstapel eine erste (514, 922) und eine zweite Reflektorschicht (518, 928) aufweist, welche in Angrenzung an gegenüber liegende Seiten der Aufzeichnungsschicht angeordnet sind.

3. Beschreibbares, optisches Aufzeichnungsmedium nach Anspruch 2, **dadurch gekennzeichnet, dass** die erste und zweite Reflektorschicht Silber enthalten.

4. Beschreibbares, optisches Aufzeichnungsmedium nach Anspruch 1, **dadurch gekennzeichnet, dass** der Aufzeichnungsstapel weiterhin eine erste (714, 914) und eine zweite (718, 918) dielektrische Schicht aufweisen, welche in Angrenzung an gegenüber liegende Seiten der Aufzeichnungsschicht angeordnet sind.

5. Beschreibbares, optisches Aufzeichnungsmedium nach Anspruch 4, **dadurch gekennzeichnet, dass** die erste und zweite dielektrische Schicht ZnS-SiO₂ enthalten.

6. Beschreibbares, optisches Aufzeichnungsmedium (900) nach Anspruch 3 und 5, welches aufweist:
- den Aufzeichnungsstapel nach Anspruch 3, welcher auf dem Substrat als zweiter Aufzeichnungsstapel ausgebildet ist,
- eine Abstandsschicht, welche auf dem ersten Aufzeichnungsstapel gegenüber dem Substrat ausgebildet ist,
- die Aufzeichnungsschicht nach Anspruch 5, welche auf der Abstandsschicht als erster Aufzeichnungsstapel ausgebildet ist, sowie
- eine Deckschicht, welche auf dem ersten Aufzeichnungsstapel gegenüber der Abstandsschicht ausgebildet ist.

7. Beschreibbares, optisches Aufzeichnungsmedium nach Anspruch 1, **dadurch gekennzeichnet, dass** es Anforderungen an eine Blue-Ray-Disc erfüllt.

8. Verwendung von Poly 3,4-Ethylendioxythiopen (PEDOT) und/oder Poly 3,4-Ethylendioxythiopen- (PEDOT) Derivaten als Material der Aufzeichnungsschicht in einem beschreibbaren, optischen Aufzeichnungsmedium.

## Revendications

1. Support d'enregistrement optique inscriptible (500, 700, 900) comprenant un substrat (520, 720, 920) portant un empilement d'enregistrement, lequel empilement d'enregistrement (510, 710, 910, 911) comprend une couche d'enregistrement (516, 716, 916, 926), **caractérisé en ce que** ladite couche d'enregistrement est faite de poly 3,4 - éthylènedioxythiophène (PEDOT) et / ou de dérivé de poly 3,4 - éthylènedioxythiophène (PEDOT).

2. Support d'enregistrement optique inscriptible selon la revendication 1, **caractérisé en ce que** l'empilement d'enregistrement comprend en outre une première (514, 922) et une deuxième (518, 928) couches réfléchissantes disposées adjacentes sur des côtés opposés de la couche d'enregistrement.

3. Support d'enregistrement optique inscriptible selon la revendication 2, **caractérisé en ce que** les première et deuxième couches réfléchissantes comprennent de l'argent.

4. Support d'enregistrement optique inscriptible selon la revendication 1, **caractérisé en ce que** l'empilement d'enregistrement comprend en outre une première (714, 914) et une deuxième (718, 918) couches diélectriques disposées adjacentes sur des côtés opposés de la couche d'enregistrement.

5. Support d'enregistrement optique inscriptible selon la revendication 4, **caractérisé en ce que** les première et deuxième couches diélectrique comprennent ZnS-SiO₂.

6. Support d'enregistrement optique inscriptible (900) selon les revendications 3 et 5, lequel support d'enregistrement comprend
- l'empilement d'enregistrement selon la revendication 3, formé sur ledit substrat comme un deuxième empilement d'enregistrement,
- une couche d'espacement formée sur ledit premier support d'enregistrement du côté opposé au substrat,
- la couche d'enregistrement selon la revendication 5, formée sur ladite couche d'espacement comme un premier empilement d'enregistrement,
- et une couche de couverture formée sur ledit premier empilement d'enregistrement du côté opposé à la couche d'espacement.

7. Support d'enregistrement optique inscriptible selon la revendication 1, **caractérisé en ce qu'**il satisfait aux exigences d'un disque Blu-Ray.

8. Utilisation de poly 3,4 - éthylènedioxythiophène (PEDOT) et / ou de dérivés de poly 3,4 - éthylènedioxythiophène (PEDOT) comme matériau de couche d'enregistrement dans un support d'enregistrement optique inscriptible.
